(19) Europäisches Patentamt
European Patent Office
Office européen des brevets

(11) **EP 4 089 589 A1**

(12) **EUROPEAN PATENT APPLICATION**

(43) Date of publication:
**16.11.2022 Bulletin 2022/46**

(21) Application number: **22152902.7**

(22) Date of filing: **24.01.2022**

(51) International Patent Classification (IPC):
**G06N 3/08** (2006.01)   **G06N 3/04** (2006.01)

(52) Cooperative Patent Classification (CPC):
**G06N 3/084; G06N 3/082;** G06N 3/0454

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.05.2021 JP 2021080210**

(71) Applicant: **FUJITSU LIMITED**
**Kawasaki-shi, Kanagawa 211-8588 (JP)**

(72) Inventor: **Hara, Yasushi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57) An information processing program that causes at least one computer to execute a process, the process includes acquiring a value that indicates a progress status of training for an input-side layer among a plurality of layers included in a machine learning model; and when the value is more than or equal to a threshold value, repeating acquiring each value for a plurality of layers that follows the input-side layer.

## FIG. 4

**Description**

FIELD

The embodiments discussed herein are related to an information processing program, an information processing method, and an information processing device.

BACKGROUND

Various training methods for machine learning models are being studied. For example, there is a technique of stopping update of weight information of a layer for which training of a machine learning model has progressed to some extent. In the following description, this technique will be referred to as "existing technique". Furthermore, stopping the update of target weight information is referred to as "skip".

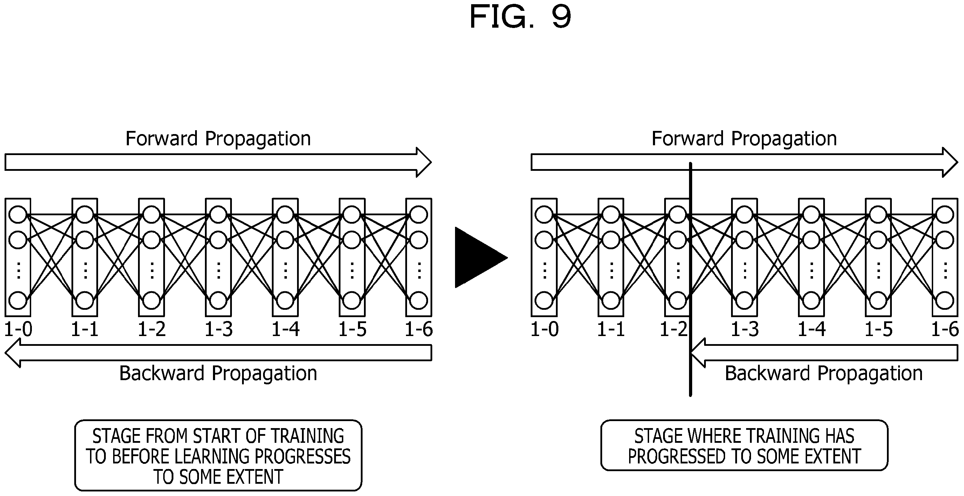

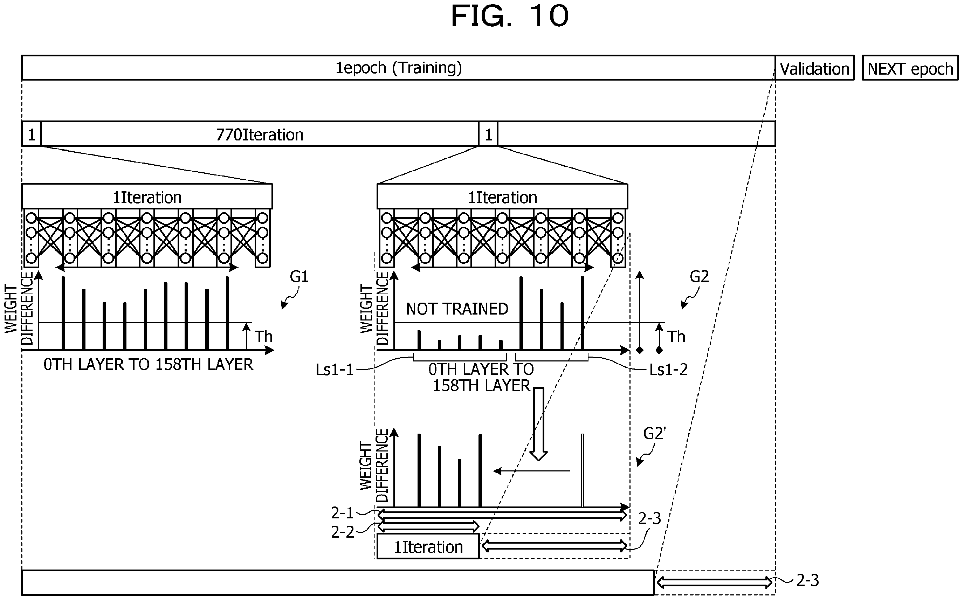

FIGs. 9 and 10 are diagrams for describing the existing technique.

FIG. 9 will be described. In an existing machine learning model, the number of layers is about 160, but in FIG. 9, description will be given using layers 1-0, 1-1, 1-2, 1-3, 1-4, 1-5, and 1-6, for convenience of description. An input-side layer is the layer 1-0, and an output-side layer is the layer 1-6.

In the existing technique, "Forward Propagation" and "Backward Propagation" are executed for all the layers 1-0 to 1-6 in a stage from the start of training for the machine learning model to before the training progresses to some extent, and the weight information for all the layers 1-0 to 1-6 are updated.

In the existing technique, in the stage where the training of the machine learning model has progressed to some extent, the update of the weight information for the layer in which the training has progressed is skipped in order from the input-side layer. If the update is skipped from the output-side layer, the training accuracy does not reach target accuracy, but the update is skipped from the input-side layer, the training accuracy can be improved. In the example illustrated in FIG. 9, the update of the weight information for the layers 1-0, 1-1, 1-2 is stopped.

Assuming that a total processing amount of Forward Propagation is "1", a processing amount of Backward Propagation is "2". For example, in a state where Backward Propagation is not performed at all, a processing speed will be tripled, which is the limit of speedup.

FIG. 10 will be described. Learning for the machine learning model is performed in units of epoch. For example, one epoch includes 770 iterations. The processing of executing "Forward Propagation" and "Backward Propagation" once for the machine learning model and updating the weight information corresponds to one iteration.

Graphs G1 and G2 in FIG. 10 illustrate relationships between each layer and a weight difference in iteration at different stages. The graph G1 illustrates the weight difference of each layer in the case where iteration of the first time has been executed. The graph G2 illustrates the weight difference of each layer in the case where iteration has been executed several hundred times after the first time. The vertical axis of graphs G1 and G2 is an axis corresponding to the weight difference, and the horizontal axis is an axis corresponding to the layer.

The weight difference indicates a difference between the weight information in the case where the (n - 1)th iteration has been executed and the weight information in the case where the nth iteration has been executed. A layer with a large weight difference indicates that the layer has been trained. A layer with the weight difference less than a threshold value indicates that the layer has not been trained.

In the example illustrated in the graph G1, the weight difference is equal to or larger than a threshold value Th in all the layers (for example, the 0th to 158th layers), and all the layers have been trained. In the example illustrated in the graph G2, the weight differences of the input-side layers Ls 1-1 are less than the threshold value and have not been trained. On the other hand, the weight differences of the output-side layers Ls 1-2 are equal to or larger than the threshold value and have been trained.

In the existing technique, a calculation amount and a communication amount for calculating an error gradient are reduced by skipping the processing of updating the weight information of the input-side layers Ls 1-1. For example, as illustrated in graph G2', a processing amount 2-1 needed for normal one iteration becomes a processing amount 2-2, and a processing amount 2-3 is reduced. In other words, the reduction effect per epoch is also the processing amount 2-3. Note that, as will be described below, to specify the progress of training in each layer of the machine learning model, a norm of the weight of each layer is calculated.

U.S. Patent Application Publication No. 2020/0380365 and U.S. Patent Application Publication No. 2020/0285992 are disclosed as related art.

SUMMARY

[TECHNICAL PROBLEM]

However, the above-described existing technique has a problem that calculation cost is high.

In the existing technique, the norm of the weight of each layer is calculated in order to specify the progress of training of each layer of the machine learning model. Meanwhile, in the case of updating the weight information of all the layers regardless of the progress of training for the machine learning model, the norm calculation of the weight of each layer is not needed.

Here, the technique of updating the weight information of all the layers at all times regardless of the progress of training for the machine learning model will be referred to as "another existing technique" in order to be distinguished from the existing technique (gradient skip technique).

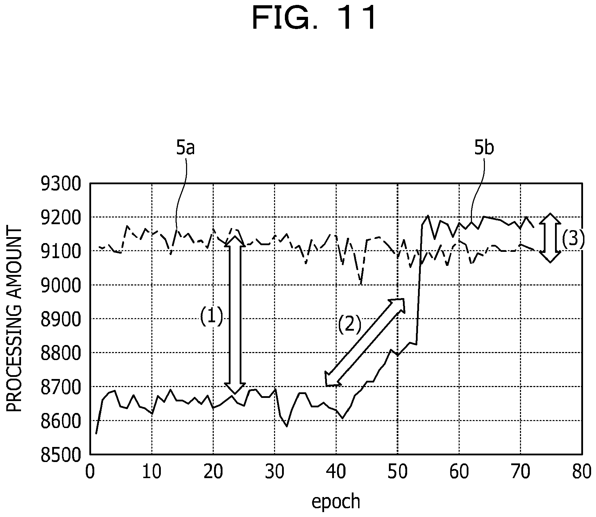

FIG. 11 is a graph for describing a problem of the existing technique. The vertical axis of FIG. 11 is an axis corresponding to the processing amount of images (samples) per unit time (sec), and the horizontal axis is an axis corresponding to epoch. The processing amount of images per unit time is simply referred to as a "processing amount".

Line 5a illustrates the relationship between the processing amount and epoch of the another existing technique. Line 5b illustrates the relationship between the processing amount and epoch of the existing technique. FIG. 11 illustrates an example of a case where the input-side 0th layer to 30th layer are skipped with a certain threshold value among the 150 layers of the machine learning model.

In the existing technique, the norm of the weight of the layers 150 is calculated for each iteration in 50 convolutional layers (hereinafter Conv layers) in the period of about 0 to 40 epochs. Therefore, as illustrated in (1) of FIG. 11, the processing amount of the existing technique is smaller than that of the another existing technique by 500 samples/sec.

Next, in the existing technique, in the period of about 40 to 50 epochs, the weight difference of the Conv layers of 30 layers (10 layers for the Conv layers) gradually reaches the threshold value, the number of layers to be skipped gradually increases, and the norm calculation is skipped. As the calculation amount of norm decreases in this manner, the processing amount gradually increases in the existing technique, as illustrated in (2) of FIG. 11.

Next, in the existing technique, it is possible to skip 30 layers during the transition period of 50 epochs, which reduces the calculation amount, but the norm calculation for the remaining Conv layers of 40 layers for the next skip remains. The processing amount is about 9200 samples/sec. As illustrated in (3) of FIG. 11, the improvement is only about 100 samples/sec as compared with the another existing technique.

As described in FIG. 11, in the existing technique, the norm calculation for determining the progress of training occurs in order to determine whether the layer can be skipped, and the calculation cost is generally higher than in the another existing technique, and the processing amount may decrease on the whole.

In one aspect, an object of the present embodiment is to provide an information processing program, an information processing method, and an information processing device capable of reducing the calculation cost.

[SOLUTION TO PROBLEM]

According to an aspect of the embodiments, an information processing program that causes at least one computer to execute a process, the process includes acquiring a value that indicates a progress status of training for an input-side layer among a plurality of layers included in a machine learning model; and when the value is more than or equal to a threshold value, repeating acquiring each value for a plurality of layers that follows the input-side layer.

[ADVANTAGEOUS EFFECTS OF INVENTION]

The calculation cost can be reduced.

BRIEF DESCRIPTION OF DRAWINGS

FIG. 1 is a graph illustrating a tendency of evaluation indexes;
FIG. 2 is a table for describing processing of an information processing device according to the present embodiment;
FIG. 3 is a graph for describing a relationship between epoch and a training status of each layer;
FIG. 4 is a functional block diagram illustrating a configuration of an information processing device according to the present embodiment;
FIG. 5 is a flowchart illustrating a processing procedure of the information processing device according to the present embodiment;

FIG. 6 is graphs illustrating an effect of the information processing device according to the present embodiment;
FIG. 7 is a diagram for describing another processing of the information processing device;
FIG. 8 is a diagram illustrating an exemplary hardware configuration of a computer that implements functions similar to those of the information processing device;
FIG. 9 is a diagram (1) for describing an existing technique;
FIG. 10 is a diagram (2) for describing the existing technique; and
FIG. 11 is a graph for describing a problem of the existing technique.

DESCRIPTION OF EMBODIMENTS

Embodiments of an information processing program, an information processing method, and an information processing device disclosed in the present application are hereinafter described in detail with reference to the drawings. Note that the present embodiment is not limited to the embodiments.

[Embodiment]

An information processing device according to the present embodiment calculates a weight difference and specifies whether training of a target layer of a machine learning model has progressed. In the following description, among a plurality of layers included in the machine learning model, the layer for which the weight difference is to be calculated is appropriately referred to as "target layer".

The weight difference is defined by the equation (1). The subscript "l" in the equation (1) corresponds to the number of iterations. For example, "$W_{l+1} - W_l$" indicates the weight difference between weight information of the (l + 1)th iteration and weight information of the lth iteration. In the equation (1), constants are preset for "LR", "Decay", and "mom".

[Math. 1]

$$W_{l+1} - W_l = LR \times \Delta W_l - (W_l \times LR \times Decay) + mom \times V_{l-1} \qquad \cdots (1)$$

$\Delta W_l$ in the equation (1) represents a difference between a weight of the previous iteration and a weight of the iteration of this time in tensor in the target layer. $W_l$ in the equation (1) represents the weight updated by the iteration of this time in tensor in the target layer. $V_{l-1}$ is a tensor indicating momentum. For example, the equation (2) defines a relationship between $V_l$ and $V_{l-1}$.

[Math. 2]

$$momentum = mom \times V_l$$
$$= mom \times (LR \times \Delta W_l - (W_l \times LR \times Decay) + mom \times V_{l-1})$$

$$\cdots (2)$$

The information processing device calculates a norm (g_weight_norm) of $\Delta W_l$, a norm (weight_norm) of $W_l$, and a norm (momentum_norm) of $V_l$, respectively, in order to convert the value of the equation (1) into a scalar value comparable to a threshold value. The norm (g_weight_norm) of $\Delta W_l$ is calculated by the equation (3). The norm of $W_l$ is calculated by the equation (4). The norm of $V_l$ is calculated by the equation (5).

[Math. 3]

$$g\_weight\_norm = \sqrt{\sum_{k=1}^{n} \Delta W_k^2} \qquad \cdots (3)$$

[Math. 4]

$$\text{weight\_norm} = \sqrt{\sum_{k=1}^{n} W_k^2} \qquad \cdots (4)$$

[Math. 5]

$$\text{momentum\_norm} = \sqrt{\sum_{k=1}^{l} (mom \times V_l)^2} \qquad \cdots (5)$$

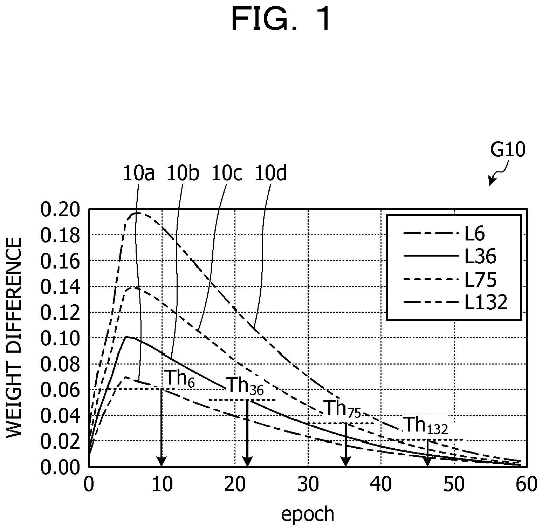

FIG. 1 is a graph illustrating a tendency of evaluation indexes. The vertical axis of graph G10 in FIG. 1 is an axis corresponding to the weight difference, and the horizontal axis is an axis corresponding to epoch. Line 10a in FIG. 10 illustrates the relationship between the weight difference and epoch in a case where the 6th layer (L6) of the machine learning model is the target layer. Line 10b illustrates the relationship between the weight difference and epoch in a case where the 36th layer (L36) is the target layer. Line 10c illustrates the relationship between the weight difference and epoch in a case where the 75th layer (L75) is the target layer. Line 10d illustrates the relationship between the weight difference and epoch in a case where the 132nd layer (L132) is the target layer. When the layers are arranged from an input side to an output side of the machine learning model, the order is L6, L36, L75, and L132.

A threshold value is set for each layer, and in a case where the weight difference has reached the threshold value, calculation of the weight difference of the target layer is skipped. For example, in L6, the weight difference reaches a threshold value $Th_6$ in 10 epochs. In L36, the weight difference reaches a threshold value $Th_{36}$ in 22 epochs. In L75, the weight difference reaches a threshold value $Th_{75}$ in 35 epochs. In L132, the weight difference reaches a threshold value $Th_{75}$ in 46 epochs. In other words, the weight difference reaches the threshold value from the input-side layer.

Next, an example of processing of the information processing device according to the present embodiment will be described. In the information processing device according to the present embodiment, the initial target layer is only one layer. Next, the information processing device repeatedly executes the processing of calculating the weight difference for a plurality of layers as the target layers, following the layer with the weight difference having reached the threshold value, after the weight difference of the target layer has reached the threshold value. In the present embodiment, the value of the weight difference having become less than the threshold value is described that the weight difference has reached the threshold value.

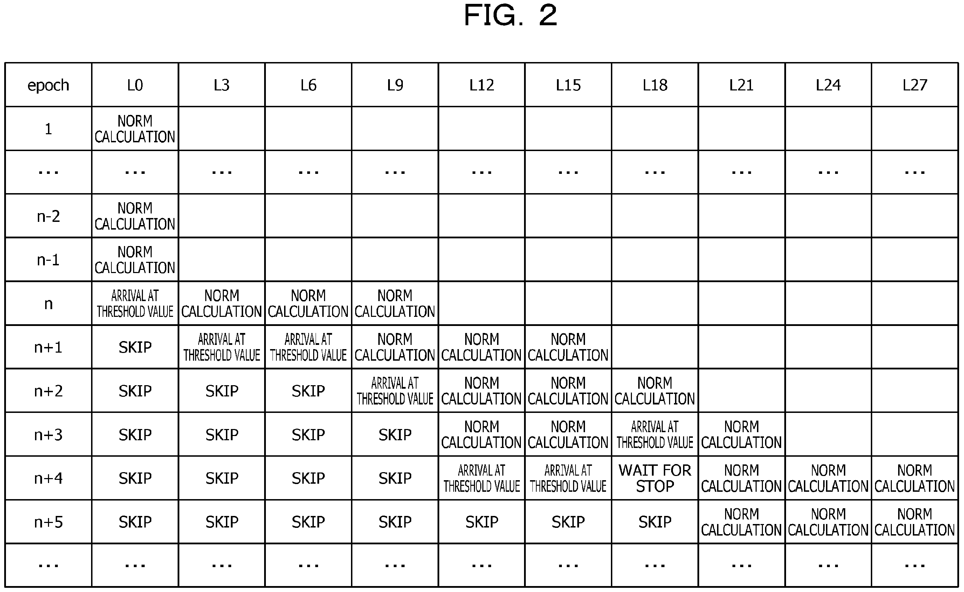

FIG. 2 is a table for describing processing of the information processing device according to the present embodiment. In FIG. 2, description will be given using the 0th layer (L0), the 3rd layer (L3), the 6th layer (L6), the 9th layer (L9), and the 12th layer (L12) among the plurality of layers included in the machine learning model. Furthermore, description will be given using the 15th layer (L15), the 18th layer (L18), the 21st layer (L21), the 24th layer (L24), and the 27th layer (L27) among the plurality of layers included in the machine learning model. For example, the layers (L0, 3, 6, 9, 12, 15, 18, 21, 24, and 27) corresponds to the Conv layers. In the description of FIG. 2, calculating the weight difference is referred to as "norm calculation".

The information processing device inputs training data into the machine learning model, executes Forward Propagation and Backward Propagation, and starts training the machine learning model. As illustrated in FIG. 2, the information processing device executes the norm calculation of the target layer for each epoch.

The norm calculation (initial norm calculation) in 1 epoch will be described. The information processing device starts the norm calculation for L0 as the target layer.

The norm calculation in 2 epochs to (n - 1) epochs will be described. The information processing device continues the norm calculation for L0 as the target layer.

The norm calculation in n epochs will be described. n is a natural number. When specifying that the weight difference of L0 has reached the threshold value, the information processing device starts the norm calculation for the three layers "L3, L6, and L9" on the output side with respect to the layer that has reached the threshold value. At the stage of n epochs, training of each layer has progressed to some extent.

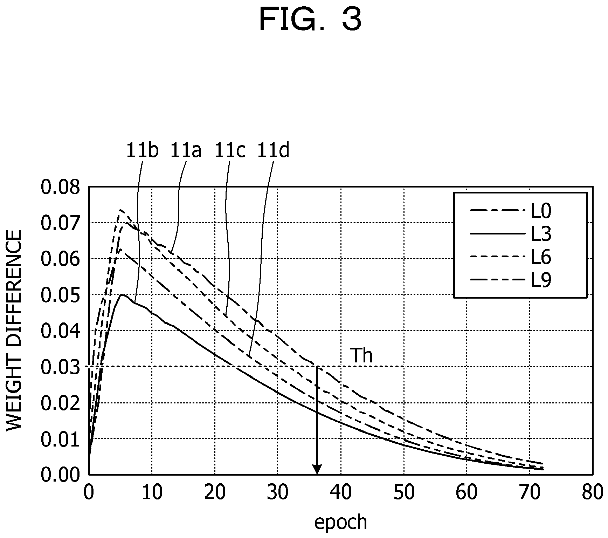

FIG. 3 is a graph for describing a relationship between epoch and a training status of each layer. In FIG. 3, description will be given using the weight differences of L0, L3, L6, and L9. Note that the weight differences of L3, L6, and L9 are given for description, and it is assumed that the norm calculation for L3, L6, and L9 has not been performed at or before (n - 1) epochs.

In the example illustrated in FIG. 3, the weight difference of L0 has reached the threshold value at 37 epochs. Furthermore, training of L3, L6, and L9 has also progressed at 37 epochs, and in the example of FIG. 3, the weight differences of L3, L6, and L9 have also reached the threshold value. Therefore, in the case where the norm calculation is moved from L0 to L3, L6, and L9, the weight differences of L3, L6, and L9 will also reach the threshold value soon.

The description returns to the description of FIG. 2. The norm calculation in (n + 1) epochs will be described. The information processing device skips the norm calculation of L0. When specifying that the weight differences of L3 and L6 have reached the threshold value, the information processing device starts the norm calculation for "L12 and L15" on the output side with respect to the layers that have reached the threshold value. The information processing device continues the norm calculation for L9.

The norm calculation in (n + 2) epochs will be described. The information processing device skips the norm calculation of L0, L3, and L6. When specifying that the weight difference of L9 has reached the threshold value, the information processing device starts the norm calculation for "L18" on the output side with respect to the layer that has reached the threshold value. The information processing device continues the norm calculation for L12 and L15.

The norm calculation in (n + 3) epochs will be described. The information processing device skips the norm calculation of L0, L3, L6, and L9. When specifying that the weight difference of L18 has reached the threshold value, the information processing device starts the norm calculation for "L21" on the output side with respect to the layer that has reached the threshold value.

The norm calculation in (n + 4) epochs will be described. The information processing device skips the norm calculation of L0, L3, L6, and L9. The information processing device waits for stop of the norm calculation of L18 because the norm calculation of the layers L12 and 15 on the input side with respect to L18 with the weight difference having reached the threshold value has not been skipped. When specifying that the weight differences of L12 and L15 have reached the threshold value, the information processing device starts the norm calculation for "L24 and L27" on the output side with respect to the layers that have reached the threshold value. The information processing device continues the norm calculation for L21.

The norm calculation in (n + 5) epochs will be described. The information processing device skips the norm calculation of L0, L3, L6, L9, L12, L15, and L18. The information processing device continues the norm calculation for L21, L24, and L27. Description of the norm calculation in (n + 6) epochs is omitted.

As described above, the information processing device according to the present embodiment can narrow down the target layer for which the norm calculation is to be executed and reduce the calculation cost when training the machine learning model.

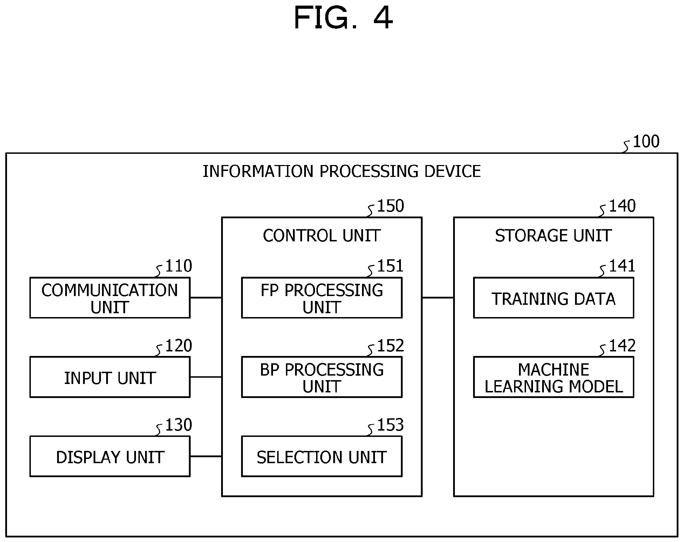

Next, one example of a configuration of the information processing device according to the present embodiment will be described. FIG. 4 is a functional block diagram illustrating a configuration of the information processing device according to the present embodiment. As illustrated in FIG. 4, an information processing device 100 includes a communication unit 110, an input unit 120, a display unit 130, a storage unit 140, and a control unit 150.

The communication unit 110 receives various data from an external device via a network. The communication unit 110 is an example of a communication device. For example, the communication unit 110 may also receive training data 141 or the like, which will be described below, from an external device.

The input unit 120 is an input device that inputs various types of information to the control unit 150 of the information processing device 100. The input unit 120 corresponds to a keyboard, a mouse, a touch panel, and the like.

The display unit 130 is a display device that displays information output from the control unit 150.

The storage unit 140 has training data 141 and a machine learning model 142. The storage unit 140 corresponds to a semiconductor memory element such as a random access memory (RAM) or a flash memory, or a storage device such as a hard disk drive (HDD).

The training data 141 is data used when training of the machine learning model 142 is executed. For example, the training data 141 has a plurality of pairs of input data and correct answer data.

The machine learning model 142 is model data corresponding to a neural network having a plurality of layers.

The control unit 150 includes a forward propagation (FP) processing unit 151, a backward propagation (BP) processing unit 152, and a selection unit 153. The control unit 150 is implemented by a central processing unit (CPU), a graphics processing unit (GPU), a hard-wired logic such as an application specific integrated circuit (ASIC) or a field programmable gate array (FPGA), or the like.

The FP processing unit 151 executes Forward Propagation for the machine learning model 142. For example, the FP processing unit 151 inputs input data of the training data 141 to an input layer of the machine learning model 142, and calculates an output value of the machine learning model 142. The FP processing unit 151 outputs output value information to the BP processing unit 152.

The BP processing unit 152 executes Backward Propagation for the machine learning model 142. For example, the BP processing unit 152 calculates an error between an output value output from an output layer of the machine learning model 142 and the correct answer data of the training data 141, and updates the weight information of each layer of the machine learning model 142 so that the error becomes small by error back propagation.

Furthermore, when receiving a notification of the target layer from the selection unit 153 to be described below, the BP processing unit 152 executes the norm calculation for the target layer among all the layers included in the machine learning model 142. For example, the BP processing unit 152 calculates the norm of $\Delta W_l$, the norm of $W_l$, and the norm of $V_l$ on the basis of the above equations (3), (4), and (5), and outputs a calculation result of each target layer to the selection unit 153.

When receiving selection of a layer for which the norm calculation is to be skipped from the selection unit 153, the BP processing unit 152 skips the norm calculation for the target layer for which the selection is accepted. Furthermore, the BP processing unit 152 stops the error propagation of the target layer for which the norm calculation is to be skipped and layers on the input side with respect to the target layer.

The selection unit 153 selects the target layer for which the norm calculation is to be executed on the basis of the result of the norm calculation output from the BP processing unit 152, and notifies the BP processing unit 152 of the selected target layer. The selection unit 153 sets only one layer as an initial target layer. For example, the selection unit 153 selects L0 as the initial target layer and outputs the selected target layer to the BP processing unit 152.

When acquiring the calculation result of the norm calculation of the target layer from the BP processing unit 152, the selection unit 153 calculates the weight difference of the target layer on the basis of the equation (1) and determines whether the weight difference has reached the threshold value. In the case where the weight difference of the target layer has reached the threshold value, the selection unit 153 notifies the BP processing unit 152 that the norm calculation for the target layer with the weight difference having reached the threshold value is skipped.

In the case where the weight difference of the initially selected L0 has reached the threshold value, the selection unit 153 selects a plurality of layers (L3, L6, and L9) on the output side with respect to L0 as target layers and outputs the target layers to the BP processing unit 152, as described in FIG. 2. The selection unit 153 selects the target layer so that the number of the target layers becomes "M (for example, 3)" after the weight difference of the initial target layer reaches the threshold value. When selecting the target layer, the selection unit 153 preferentially selects a layer with the weight difference having not reached the threshold value and closer to the input side.

By the way, the selection unit 153 waits for skipping L18 in the case where the weight difference of L18 has reached the threshold value and the weight differences of L12 and L15 have not reached the threshold value among the plurality of layers for which the norm calculation is performed, as described in (n + 3) epochs of FIG. 2. The selection unit 153 outputs that L18 is to be skipped after the weight differences of L12 and L15 reach the threshold value to the BP processing unit 152.

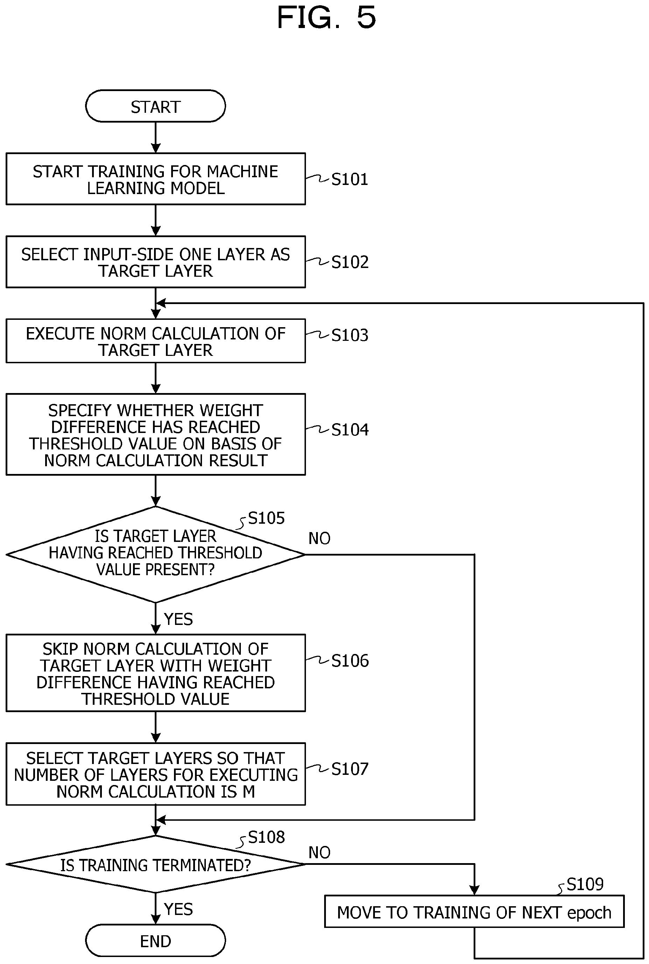

Next, an example of a processing procedure of the information processing device 100 according to the present embodiment will be described. FIG. 5 is a flowchart illustrating a processing procedure of the information processing device according to the present embodiment. As illustrated in FIG. 5, the FP processing unit 151 and the BP processing unit 152 of the information processing device 100 start training (Forward Propagation and Backward Propagation) for the machine learning model 142 (step S101).

The selection unit 153 of the information processing device 100 selects input-side one layer of the machine learning model 142 as the target layer (step S102). The BP processing unit 152 executes the norm calculation of the target layer (step S103).

The selection unit 153 specifies whether the weight difference has reached the threshold value on the basis of the result of the norm calculation (step S104). In the case where the target layer with the weight difference having reached the threshold value is present (step S105, Yes), the selection unit 153 moves onto step S106. On the other hand, in the case where the target layer with the weight difference having reached the threshold value is not present (step S105, No), the selection unit 153 moves onto step S108.

The BP processing unit 152 skips the norm calculation of the target layer with the weight difference having reached the threshold value (step S106). The selection unit 153 selects the target layers so that the number of layers for which the norm calculation is to be executed are M (for example, three) (step S107).

In the case of terminating the training (step S108, Yes), the information processing device 100 terminates the processing. On the other hand, in the case of not terminating the training (step S108, No), the information processing device 100 proceeds to the training of the next epoch (step S109) and proceeds to step S103.

Next, effects of the information processing device 100 according to the present embodiment will be described. The information processing device 100 executes the norm calculation for only one layer as the initial target layer. Next, the information processing device 100 repeatedly executes the processing of calculating the weight difference for a plurality of layers as the target layers, following the layer with the weight difference having reached the threshold value, after the weight difference of the target layer has reached the threshold value. In this way, the information processing device 100 can reduce the calculation cost by narrowing down the target layers for which the norm calculation is to be executed.

The information processing device 100 can further reduce the calculation cost by skipping the norm calculation for the target layer with the weight difference having reached the threshold value.

In the case where values of a first layer and a second layer on the output side with respect to the first layer have reached the threshold value, or in the case where the calculation of the value for the first layer has been skipped (stopped) and the value of the second layer has reached the threshold value, among a plurality of layers, the information processing device 100 skips the calculation of the value for the second layer. Furthermore, in the case where the value of the second layer has reached the threshold value and the value of the first layer has not reached the threshold value, the information processing device 100 continues (waits for skipping) the calculation of the value for the second layer until the value of the first layer reaches the threshold value. As a result, it is possible to skip the layers in order from an input-side layer, and the training accuracy of the machine learning model 142 can be improved.

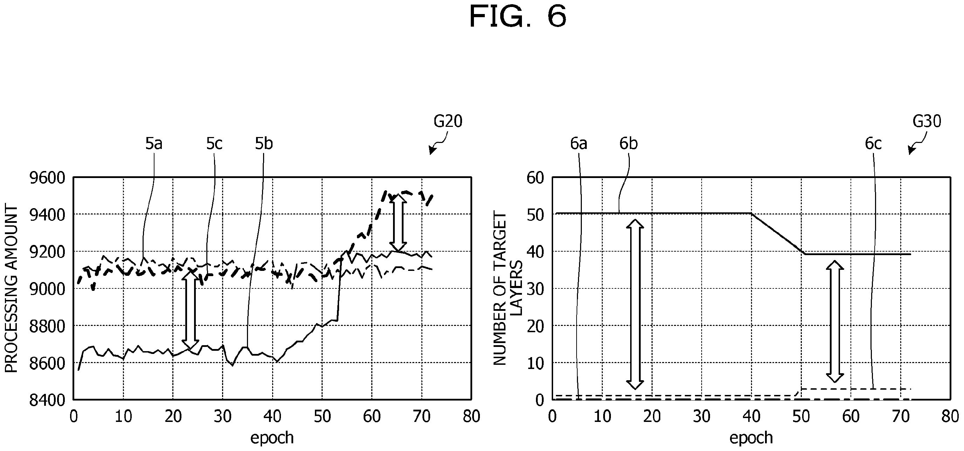

FIG. 6 is graphs illustrating an effect of the information processing device according to the present embodiment. The vertical axis of graph G20 in FIG. 6 is an axis corresponding to the processing amount of images (samples) per unit time (sec), and the horizontal axis is an axis corresponding to epoch. The processing amount of images per unit time is simply referred to as a "processing amount". Line 5a of the graph G20 illustrates the relationship between the processing amount and epoch of another existing technique. Line 5b illustrates the relationship between the processing amount and epoch of the existing technique. Line 5c illustrates the relationship between the processing amount and epoch of the information processing device according to the present embodiment.

The vertical axis of graph G30 in FIG. 6 is an axis corresponding to the number of target layers for norm calculation, and the horizontal axis is an axis corresponding to epoch. The number of target layers for norm calculation is simply described as "the number of target layers". Line 6a of the graph G30 illustrates the relationship between the number of target layers and epoch of the another existing technique. Line 6b illustrates the relationship between the number of target layers and epoch of the existing technique. Line 6c illustrates the relationship between the number of target layers and epoch of the information processing device according to the present embodiment.

From 0 to about 50 epochs will be discussed. Compared with the existing technique (line 6b), the number of target layers (line 6c) of the information processing device 100 is 1/50. Thereby, the processing amount (line 5c) of the information processing device 100 is comparable with the processing amount (line 5a) of the another existing technique.

50 epochs and subsequent epochs will be discussed. In the information processing device 100, the weight difference of each layer sequentially reaches the threshold value and skipping is started, the processing amount (line 5c) increases due to the calculation amount for the error gradient calculation and the stop of back propagation. Even after skipping, since the total number of norm calculations is set to 3, the speed is not reduced by the processing for 37 layers and the processing amount is improved.

In the example illustrated in FIG. 6, skipping has been stopped at the 30 layers, but the processing amount further increases by skipping the subsequent layers as well.

By the way, in the machine learning model 142, the mass of the number of elements of each layer is divided into four stages (four types), any layer (the last layer L36, L75, or L132 of each stage) may also be selected for each mass and the norm calculation may also be performed.

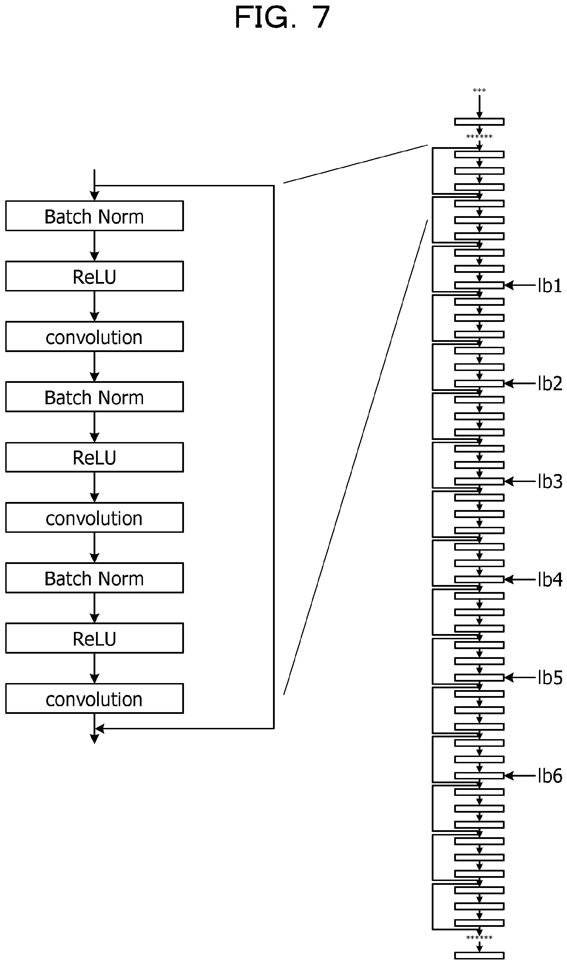

FIG. 7 is a diagram for describing another processing of the information processing device. In the example illustrated in FIG. 7, the machine learning model 142 is divided into a plurality of blocks. Each block includes Batch Norm, ReLU, convolution, and the like. The information processing device has selected layers Ib1, Ib2, Ib3, Ib4, Ib5, and Ib6 as the target layers. The information processing device 100 may also select Batch Norm or the like as the target layer instead of the Conv layer and execute the norm calculation.

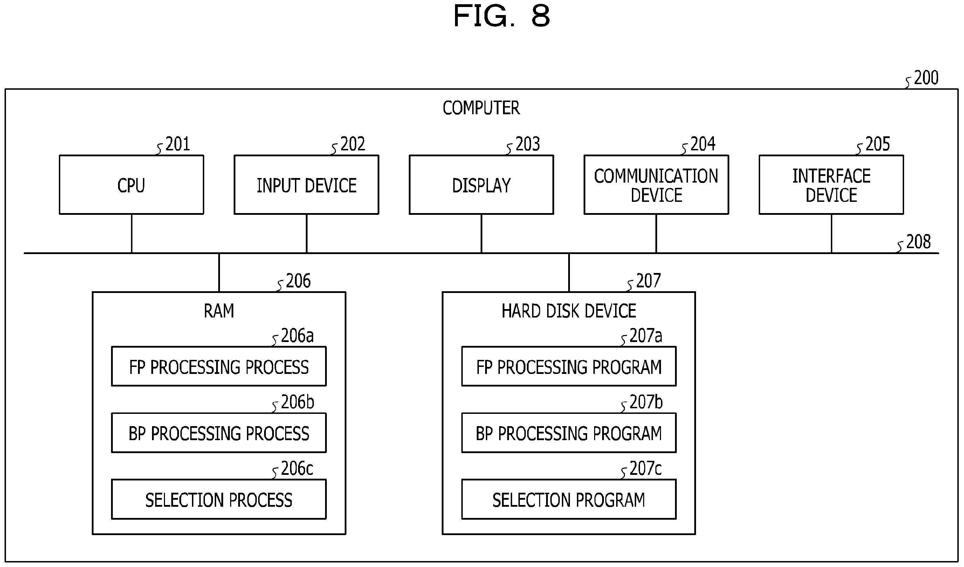

Next, an example of a hardware configuration of a computer that implements functions similar to the information processing device 100 described in the above embodiment will be described. FIG. 8 is a diagram illustrating an example of a hardware configuration of a computer that implements functions similar to the information processing device.

As illustrated in FIG. 8, a computer 200 includes a CPU 201 that executes various types of calculation processing, an input device 202 that receives input of data from a user, and a display 203. Furthermore, the computer 200 includes a communication device 204 that receives data from an external device and an interface device 205 connected with various devices. The computer 200 includes a RAM 206 that temporarily stores various types of information, and a hard disk device 207. Then, each of the devices 201 to 207 is connected to a bus 208.

The hard disk device 207 has an FP processing program 207a, a BP processing program 207b, and a selection program 207c. The CPU 201 reads the FP processing program 207a, the BP processing program 207b, and the selection program 207c and expands them in the RAM 206.

The FP processing program 207a functions as an FP processing process 206a. The BP processing program 207b functions as a BP processing process 206b. The selection program 207c functions as a selection process 206c.

Processing of the FP processing process 206a corresponds to the processing of the FP processing unit 151. Processing of the BP processing process 206b corresponds to the processing of the BP processing unit 152. Processing of the selection process 206c corresponds to the processing of the selection unit 153.

Note that the programs 207a to 207c do not need to be stored in the hard disk device 207 beforehand. For example, the programs are stored in a "portable physical medium" such as a flexible disk (FD), a compact disc read only memory (CD-ROM), a digital versatile disc (DVD) disk, a magneto-optical disk, or an integrated circuit (IC) card to be inserted in the computer 200. Then, the computer 200 may also read the programs 207a to 207c and execute the programs.

**Claims**

1. An information processing program that causes at least one computer to execute a process, the process comprising:

   acquiring a value that indicates a progress status of training for an input-side layer among a plurality of layers included in a machine learning model; and
   when the value is more than or equal to a threshold value, repeating acquiring each value for a plurality of layers that follows the input-side layer.

2. The information processing program according to claim 1, wherein the process further comprising
   stopping the acquiring a value for the layer in which the value is more than or equal to the threshold value.

3. The information processing program according to claim 2, wherein the stopping includes:

   when a value of a first layer and a value of a second layer on an output-side than the first layer are more than or equal to the threshold value, stopping the acquiring a value for the second layer; and
   when the acquiring a value for the first layer is stopped and the value for the second layer is more than or equal to the threshold value, stopping the acquiring a value for the second layer.

4. The information processing program according to claim 3, wherein the process further comprising
   continuing the acquiring a value for the second layer until the value for the first layer is more than or equal to the threshold value when the value for the second layer is more than or equal to the threshold value and the value for the first layer is less than the threshold value.

5. The information processing program according to any one of claims 1 to 4, wherein a norm is calculated as the value.

6. An information processing method for a computer to execute a process comprising:

   acquiring a value that indicates a progress status of training for an input-side layer among a plurality of layers included in a machine learning model; and
   when the value is more than or equal to a threshold value, repeating acquiring each value for a plurality of layers that follows the input-side layer.

7. The information processing method according to claim 6, wherein the process further comprising
   stopping the acquiring a value for the layer in which the value is more than or equal to the threshold value.

8. The information processing method according to claim 7, wherein the stopping includes:

   when a value of a first layer and a value of a second layer on an output-side than the first layer are more than or equal to the threshold value, stopping the acquiring a value for the second layer; and
   when the acquiring a value for the first layer is stopped and the value for the second layer is more than or equal to the threshold value, stopping the acquiring a value for the second layer.

9. The information processing method according to claim 8, wherein the process further comprising
   continuing the acquiring a value for the second layer until the value for the first layer is more than or equal to the threshold value when the value for the second layer is more than or equal to the threshold value and the value for the first layer is less than the threshold value.

10. The information processing method according to any one of claims 6 to 9, wherein a norm is calculated as the value.

11. An information processing device comprising:

    one or more memories; and
    one or more processors coupled to the one or more memories and the one or more processors configured to:

acquire a value that indicates a progress status of training for an input-side layer among a plurality of layers included in a machine learning model, and

when the value is more than or equal to a threshold value, repeat acquiring each value for a plurality of layers that follows the input-side layer.

12. The information processing device according to claim 11, wherein the one or more processors are further configured to stop the acquiring a value for the layer in which the value is more than or equal to the threshold value.

13. The information processing device according to claim 12, wherein the one or more processors are further configured to:

when a value of a first layer and a value of a second layer on an output-side than the first layer are more than or equal to the threshold value, stop the acquiring a value for the second layer, and

when the acquiring a value for the first layer is stopped and the value for the second layer is more than or equal to the threshold value, stop the acquiring a value for the second layer.

14. The information processing device according to claim 13, wherein the one or more processors are further configured to continue the acquiring a value for the second layer until the value for the first layer is more than or equal to the threshold value when the value for the second layer is more than or equal to the threshold value and the value for the first layer is less than the threshold value.

15. The information processing device according to any one of claims 11 to 14, wherein a norm is calculated as the value.

# FIG. 1

## FIG. 2

| epoch | L0 | L3 | L6 | L9 | L12 | L15 | L18 | L21 | L24 | L27 |
|---|---|---|---|---|---|---|---|---|---|---|
| 1 | NORM CALCULATION | | | | | | | | | |
| ... | ... | ... | ... | ... | ... | ... | ... | ... | ... | ... |
| n-2 | NORM CALCULATION | | | | | | | | | |
| n-1 | NORM CALCULATION | | | | | | | | | |
| n | ARRIVAL AT THRESHOLD VALUE | NORM CALCULATION | NORM CALCULATION | NORM CALCULATION | | | | | | |
| n+1 | SKIP | ARRIVAL AT THRESHOLD VALUE | ARRIVAL AT THRESHOLD VALUE | NORM CALCULATION | NORM CALCULATION | NORM CALCULATION | | | | |
| n+2 | SKIP | SKIP | SKIP | ARRIVAL AT THRESHOLD VALUE | NORM CALCULATION | NORM CALCULATION | NORM CALCULATION | | | |
| n+3 | SKIP | SKIP | SKIP | SKIP | NORM CALCULATION | NORM CALCULATION | ARRIVAL AT THRESHOLD VALUE | NORM CALCULATION | | |
| n+4 | SKIP | SKIP | SKIP | SKIP | ARRIVAL AT THRESHOLD VALUE | ARRIVAL AT THRESHOLD VALUE | WAIT FOR STOP | NORM CALCULATION | NORM CALCULATION | NORM CALCULATION |
| n+5 | SKIP | SKIP | SKIP | SKIP | SKIP | SKIP | SKIP | NORM CALCULATION | NORM CALCULATION | NORM CALCULATION |
| ... | ... | ... | ... | ... | ... | ... | ... | ... | ... | ... |

EP 4 089 589 A1

# FIG. 3

# FIG. 4

INFORMATION PROCESSING DEVICE `100`

COMMUNICATION UNIT `110`

INPUT UNIT `120`

DISPLAY UNIT `130`

CONTROL UNIT `150`

FP PROCESSING UNIT `151`

BP PROCESSING UNIT `152`

SELECTION UNIT `153`

STORAGE UNIT `140`

TRAINING DATA `141`

MACHINE LEARNING MODEL `142`

# FIG. 5

```
                    ┌─────────────┐
                    │    START    │
                    └─────────────┘
                           │
                           ▼
        ┌──────────────────────────────┐
        │   START TRAINING FOR MACHINE  │────S101
        │        LEARNING MODEL         │
        └──────────────────────────────┘
                           │
                           ▼
        ┌──────────────────────────────┐
        │  SELECT INPUT-SIDE ONE LAYER AS │──S102
        │         TARGET LAYER          │
        └──────────────────────────────┘
                           │
                           ▼
        ┌──────────────────────────────┐
        │    EXECUTE NORM CALCULATION OF │──S103
        │         TARGET LAYER          │
        └──────────────────────────────┘
                           │
                           ▼
        ┌──────────────────────────────┐
        │    SPECIFY WHETHER WEIGHT     │
        │    DIFFERENCE HAS REACHED     │──S104
        │  THRESHOLD VALUE ON BASIS OF  │
        │    NORM CALCULATION RESULT    │
        └──────────────────────────────┘
                           │
                           ▼
                    ╱──S105──╲
              ╱   IS TARGET LAYER   ╲      NO
             ╱  HAVING REACHED THRESHOLD ╲────────┐
             ╲    VALUE PRESENT?    ╱              │
              ╲                   ╱                │
                   │ YES                           │
                   ▼                               │
        ┌──────────────────────────────┐          │
        │    SKIP NORM CALCULATION OF   │          │
        │  TARGET LAYER WITH WEIGHT     │──S106    │
        │  DIFFERENCE HAVING REACHED    │          │
        │        THRESHOLD VALUE        │          │
        └──────────────────────────────┘          │
                           │                       │
                           ▼                       │
        ┌──────────────────────────────┐          │
        │   SELECT TARGET LAYERS SO THAT │         │
        │ NUMBER OF LAYERS FOR EXECUTING │──S107   │
        │   NORM CALCULATION IS M        │         │
        └──────────────────────────────┘          │
                           │                       │
                           ▼◄──────────────────────┘
                    ╱──S108──╲              NO
              ╱ IS TRAINING TERMINATED? ╲──────────┐
              ╲                         ╱          │
                   │ YES                           ▼
                   ▼                    ┌─────────────────────────┐
            ┌─────────────┐             │ MOVE TO TRAINING OF     │──S109
            │     END     │             │      NEXT epoch         │
            └─────────────┘             └─────────────────────────┘
```

# FIG. 6

# FIG. 7

# FIG. 8

COMPUTER — 200

| CPU (201) | INPUT DEVICE (202) | DISPLAY (203) | COMMUNICATION DEVICE (204) | INTERFACE DEVICE (205) |

— 208

**RAM (206)**
- FP PROCESSING PROCESS (206a)
- BP PROCESSING PROCESS (206b)
- SELECTION PROCESS (206c)

**HARD DISK DEVICE (207)**
- FP PROCESSING PROGRAM (207a)
- BP PROCESSING PROGRAM (207b)
- SELECTION PROGRAM (207c)

# FIG. 9

Forward Propagation →

○○ ⋮ ○ | ○○ ⋮ ○ | ○○ ⋮ ○ | ○○ ⋮ ○ | ○○ ⋮ ○ | ○○ ⋮ ○ | ○○ ⋮ ○

1-0  1-1  1-2  1-3  1-4  1-5  1-6

← Backward Propagation

STAGE FROM START OF TRAINING
TO BEFORE LEARNING PROGRESSES
TO SOME EXTENT

▶

Forward Propagation →

○○ ⋮ ○ | ○○ ⋮ ○ | ○○ ⋮ ○ | ○○ ⋮ ○ | ○○ ⋮ ○ | ○○ ⋮ ○ | ○○ ⋮ ○

1-0  1-1  1-2  1-3  1-4  1-5  1-6

← Backward Propagation

STAGE WHERE TRAINING HAS
PROGRESSED TO SOME EXTENT

EP 4 089 589 A1

# FIG. 10

1epoch (Training) | Validation | NEXT epoch

1 | 770Iteration | 1

1Iteration

WEIGHT DIFFERENCE

G1

Th

0TH LAYER TO 158TH LAYER

1Iteration

WEIGHT DIFFERENCE

NOT TRAINED

G2

Th

Ls1-1

0TH LAYER TO 158TH LAYER

Ls1-2

WEIGHT DIFFERENCE

G2'

2-1
2-2

1Iteration

2-3

2-3

EP 4 089 589 A1

# FIG. 11

Europäisches
Patentamt

European
Patent Office

Office européen
des brevets

## EUROPEAN SEARCH REPORT

**Application Number**

EP 22 15 2902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | K. Shirahata et al: "Content-aware computing technology for accelerating increasingly complex and massive AI processing [Japanese version]", Fujitsu Technical Review, 7 April 2021 (2021-04-07), XP055936533, Retrieved from the Internet: URL:https://www.fujitsu.com/jp/about/resources/publications/technicalreview/topics/article009.html [retrieved on 2022-06-28] * section 3 * | 1-15 | INV. G06N3/08 ADD. G06N3/04 |
| L | -& K. Shirahata et al: "Content-aware computing technology for accelerating increasingly complex and massive AI processing", Fujitsu Technical Review, 7 July 2021 (2021-07-07), XP055936534, Retrieved from the Internet: URL:https://www.fujitsu.com/global/about/resources/publications/technicalreview/topics/article009.html [retrieved on 2022-06-28] * section 3 * ----- | 1-15 | |
| X | S. Basodi: "Advances in deep learning through gradient amplification and applications", Doctoral dissertation for PhD degree at Georgia state university, 11 August 2020 (2020-08-11), XP055936867, DOI: 10.57709/18641498 Retrieved from the Internet: URL:https://doi.org/10.57709/18641498 [retrieved on 2022-06-29] * sections 2 and 3 * ----- -/-- | 1-15 | **TECHNICAL FIELDS SEARCHED (IPC)** G06N |

The present search report has been drawn up for all claims

| Place of search | Date of completion of the search | Examiner |
|---|---|---|
| The Hague | 29 June 2022 | Douarche, Nicolas |

EPO FORM 1503 03.82 (P04C01)

Europäisches Patentamt

European Patent Office

Office européen des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | X. XIAO ET AL: "Fast deep learning training through intelligently freezing layers", 2019 INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 14 July 2019 (2019-07-14), pages 1225-1232, XP033637632, DOI: 10.1109/ITHINGS/GREENCOM/CPSCOM/SMARTDATA.2019.00205 * sections II and III * | 1-15 | |
| X | A. Brock et al: "FreezeOut: accelerate training by progressively freezing layers", arXiv:1706.04983v2, 18 June 2017 (2017-06-18), XP055642559, DOI: 10.48550/arXiv.1706.04983 Retrieved from the Internet: URL:https://arxiv.org/abs/1706.04983v2 [retrieved on 2019-11-14] * section 2 * | 1-15 | TECHNICAL FIELDS SEARCHED (IPC) |
| X | C. HETTINGER ET AL: "Forward thinking: building and training neural networks one layer at a time", ARXIV.ORG, CORNELL UNIVERSITY LIBRARY, 201 OLIN LIBRARY CORNELL UNIVERSITY ITHACA, NY 14853, 8 June 2017 (2017-06-08), XP080768397, DOI: 10.48550/arXiv.1706.02480 * sections 3 and 4 * | 1-15 | |

-/--

The present search report has been drawn up for all claims

| Place of search | Date of completion of the search | Examiner |
|---|---|---|
| The Hague | 29 June 2022 | Douarche, Nicolas |

EPO FORM 1503 03.82 (P04C01)

**EUROPEAN SEARCH REPORT**

Application Number

EP 22 15 2902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | P. SAFAYENIKOO ET AL: "Weight update skipping: reducing training time for artificial neural networks", CORNELL UNIVERSITY LIBRARY, 201 OLIN LIBRARY CORNELL UNIVERSITY ITHACA, NY 14853, 5 December 2020 (2020-12-05), XP055914592, DOI: 10.48550/arXiv.2012.02792 * section 3 * | 1-15 | |
| A | S. SCARDAPANE ET AL: "Why should we add early exits to neural networks?", COGNITIVE COMPUTATION, NEW YORK, N.Y. : SPRINGER, US, vol. 12, no. 5, 17 June 2020 (2020-06-17), pages 954-966, XP037243491, DOI: 10.1007/S12559-020-09734-4 * Neural Networks with Early Exits * * Placement and Optimized Design of the Early Exits * * Training Neural Networks with Early Exits * | 1-15 | |
| A | E. BELILOVSKY ET AL: "Greedy layerwise learning can scale to ImageNet", ARXIV.ORG, CORNELL UNIVERSITY LIBRARY, 201 OLIN LIBRARY CORNELL UNIVERSITY ITHACA, NY 14853, 23 April 2019 (2019-04-23), XP081200432, DOI: 10.48550/arXiv.1812.11446 * section 3 * | 1-15 | TECHNICAL FIELDS SEARCHED (IPC) |

-/--

The present search report has been drawn up for all claims

| Place of search | Date of completion of the search | Examiner |
|---|---|---|
| The Hague | 29 June 2022 | Douarche, Nicolas |

EPO FORM 1503 03.82 (P04C01)

Europäisches
Patentamt

European
Patent Office

Office européen
des brevets

**EUROPEAN SEARCH REPORT**

Application Number

**EP 22 15 2902**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S. CHATTERJEE ET AL: "Progressive learning for systematic design of large neural networks", ARXIV.ORG, CORNELL UNIVERSITY LIBRARY, 201 OLIN LIBRARY CORNELL UNIVERSITY ITHACA, NY 14853, 23 October 2017 (2017-10-23), XP080830852, DOI: 10.48550/arXiv.1710.08177 * section III * | 1-15 | |

TECHNICAL FIELDS
SEARCHED     (IPC)

The present search report has been drawn up for all claims

| Place of search | Date of completion of the search | Examiner |
|---|---|---|
| The Hague | 29 June 2022 | Douarche, Nicolas |

page 4 of 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200380365
- US 20200285992